# FASCICULE DE BREVET EUROPEEN

(11) **EP 2 992 390 B1**
(45) Date de publication et mention de la délivrance du brevet: **12.08.2020**
(21) Numéro de dépôt: 14720133.9
(22) Date de dépôt: 29.04.2014
(51) Int. Cl.: G05B 15/02, H04L 12/28

(54) **UNITE DE GESTION ET/OU DE COMMANDE D'UNE INSTALLATION DOMOTIQUE ET PROCEDE DE FONCTIONNEMENT D'UNE TELLE UNITE DE GESTION ET/OU DE COMMANDE**
EINHEIT ZUR VERWALTUNG UND/ODER STEUERUNG EINER HEIMAUTOMATISIERUNGSANLAGE UND VERFAHREN ZUM BETRIEB SOLCH EINER VERWALTUNGS- UND/ODER STEUERUNGSEINHEIT
UNIT FOR MANAGING AND/OR CONTROLLING A HOME-AUTOMATION INSTALLATION AND METHOD OF OPERATION OF SUCH A MANAGEMENT AND/OR CONTROL UNIT

(30) Priorité: 30.04.2013 FR 1353997
(43) Date de publication de la demande: 09.03.2016
(73) Titulaire: SOMFY ACTIVITES SA, 74300 Cluses (FR)
(72) Inventeur: SYMOËN, Lionel, F-74800 La Roche Sur Foron (FR); CAVAREC, Pierre-Emmanuel, F-74130 Mont Saxonnex (FR)
(74) Mandataire: Novaimo
(86) Numéro de dépôt international: PCT/EP2014/058638
(87) Numéro de publication internationale: WO 2014/177526

(56) Documents cités:
- US-A1- 2010 138 007
- US-A1- 2011 241 848
- US-B1- 8 490 006
- Heinzelmann, E.: "Plug&Play beflügelt Gebäudeautomation", Internet, 1 avril 2006 (2006-04-01), XP002718654, Extrait de l'Internet: URL:www.ihomelab.ch/fileadmin/Dateien/PDF/ SpekGeb_PundP.pdf [extrait le 2014-01-14]
- Klapproth, A. et al.: "SARBAU Towards Highly Self-Configuring IP-Fieldbus Based Building Automation Networks", 22nd International Conference on Advanced Information Networking and Applications, 1 janvier 2008 (2008-01-01), pages 713-717, XP002718655, Extrait de l'Internet: URL:http://ieeexplore.ieee.org/xpls/abs_al l.jsp?arnumber=4482776&tag=1 [extrait le 2014-01-14]
- TRUONG T B T ET AL: "Proactive remote healthcare based on multimedia and home automation services", AUTOMATION SCIENCE AND ENGINEERING, 2009. CASE 2009. IEEE INTERNATIONAL CONFERENCE ON, IEEE, PISCATAWAY, NJ, USA, 22 August 2009 (2009-08-22), pages 385-390, XP031526918, ISBN: 978-1-4244-4578-3

## Description

L'invention concerne le domaine de la domotique. En particulier, elle concerne un procédé de fonctionnement d'une unité de gestion et/ou de commande d'une installation domotique ou pour une installation domotique. Elle concerne aussi une unité de gestion et/ou de commande fonctionnant selon ce procédé. Elle concerne enfin une installation domotique comprenant une telle unité de gestion et/ou de commande.

Il est courant d'équiper des bâtiments avec des installations domotiques comprenant une pluralité d'équipement domotiques individuels connectés en réseau. Au cours de la vie de l'installation, il est également courant de remplacer certains équipements ou d'ajouter de nouveaux équipements.

L'ajout de nouveaux équipements compatibles avec les équipements existants est très intéressant car il peut permettre d'améliorer les fonctionnalités offertes par l'installation ou permettre d'améliorer les performances de l'installation. L'ajout de nouveaux équipements compatibles avec les équipements existants est aussi très intéressant car il peut permettre à l'installation globale d'offrir de nouvelles fonctionnalités.

Toutefois, l'ajout d'un tel équipement est très coûteux et complexe car il faut, outre l'installation matérielle du nouvel équipement, finalement, à chaque ajout, d'abord repenser globalement l'installation pour définir comment le nouvel équipement peut être utilisé de manière optimale au sein de l'installation et ensuite programmer cette utilisation du nouvel équipement domotique dans l'installation, notamment de créer des scénarios d'utilisation de ce nouvel équipement.

Du fait de ces problèmes, les fonctionnements des installations domotiques sont très souvent non optimums. On peut trouver des exemples de l'art antérieur dans US2010/138007, "SARBAU - towards highly self-configuring IP-fieldbus based Building Automation Networks" XP2718655 et "Proactive Remote Healthcare Based on Multimedia and Home Automation Services" XP31526918.

Le but de l'invention est de fournir un procédé de fonctionnement d'une unité de gestion et/ou de commande remédiant aux inconvénients relevés précédemment et améliorant les procédés connus de l'art antérieur. En particulier, l'invention propose un procédé de fonctionnement simple, fiable et permettant d'optimiser la programmation et le fonctionnement d'installations domotiques.

Selon l'invention, un procédé décrit par la revendication 1, régit le fonctionnement d'une unité de gestion et/ou de commande d'une installation domotique.

L'étape de réception de données peut faire partie d'une phase de communication bidirectionnelle entre l'unité et le premier équipement, notamment faire partie d'une phase incluant une procédure de découverte lancée par l'unité.

L'étape de réception de données peut comprendre une saisie des données par un utilisateur ou un installateur, notamment une étape de saisie au niveau de l'unité. L'au moins un scénario peut impliquer au moins un deuxième équipement domotique de l'installation.

L'étape de génération automatique d'au moins un scénario peut comprendre une étape de modification d'un scénario existant préalablement ou peut consister en une étape de modification d'un scénario existant préalablement.

Le premier équipement domotique et un deuxième équipement domotique peuvent présenter un lien fonctionnel et/ou spatial, notamment peuvent être implantés dans une même zone, en particulier une même pièce d'un bâtiment.

Le procédé de fonctionnement peut comprendre une étape de communication de l'au moins un scénario à l'utilisateur ou à l'installateur et une étape de sollicitation de l'utilisateur ou de l'installateur en vue de déterminer si l'au moins un scénario doit être intégré ou non dans le fonctionnement de l'installation.

L'étape de génération automatique peut comprendre la génération de plusieurs scénarii définissant un mode de fonctionnement de l'installation.

Le premier équipement domotique peut comprendre un capteur et/ou un actionneur et/ou un élément de commande.

Le scénario généré au cours de l'étape de génération automatique peut comprendre un ensemble de commandes de mouvements coordonnés du premier équipement domotique.

Le scénario généré au cours de l'étape de génération automatique peut comprendre une modification d'un niveau d'affichage au niveau d'une interface homme-machine associée au premier équipement domotique.

L'invention concerne aussi un support d'enregistrement de données, lisible par un calculateur, sur lequel est enregistré un programme informatique comprenant des moyens de codes de programme informatique de mise en oeuvre de phases et/ou étapes du procédé de fonctionnement défini précédemment.

L'invention concerne encore une unité de gestion et/ou de commande d'une installation domotique. Elle comprend des moyens matériels et/ou logiciels de mise en oeuvre du procédé de fonctionnement défini précédemment.

L'invention concerne encore une installation domotique comprenant une unité de gestion et/ou de commande définie précédemment.

L'installation domotique peut comprendre une interface homme-machine associée à un ou plusieurs équipements domotiques.

L'invention porte encore sur un support d'enregistrement de données, lisible par un calculateur, sur lequel est enregistré un programme informatique comprenant des moyens de codes de programme informatique de mise en oeuvre des phases et/ou étapes du procédé de fonctionnement défini précédemment.

L'invention porte encore sur un programme informatique comprenant un moyen de code de programme informatique adapté à la réalisation des phases et/ou étapes du procédé de fonctionnement défini précédemment, lorsque le programme tourne sur un ordinateur.

L'invention sera mieux comprise à la lecture de la description qui va suivre, donnée uniquement à titre d'exemple et faite en se référant aux dessins annexés sur lesquels :
La figure 1 représente sous forme de schéma fonctionnel un premier mode de réalisation d'une installation domotique munie d'une unité de gestion et/ou de commande selon l'invention.
La figure 2 est un ordinogramme d'un mode d'exécution du procédé de fonctionnement selon l'invention.
La figure 3 représente sous forme de schéma fonctionnel un deuxième mode de réalisation d'une installation domotique munie d'une unité de gestion et/ou de commande selon l'invention.

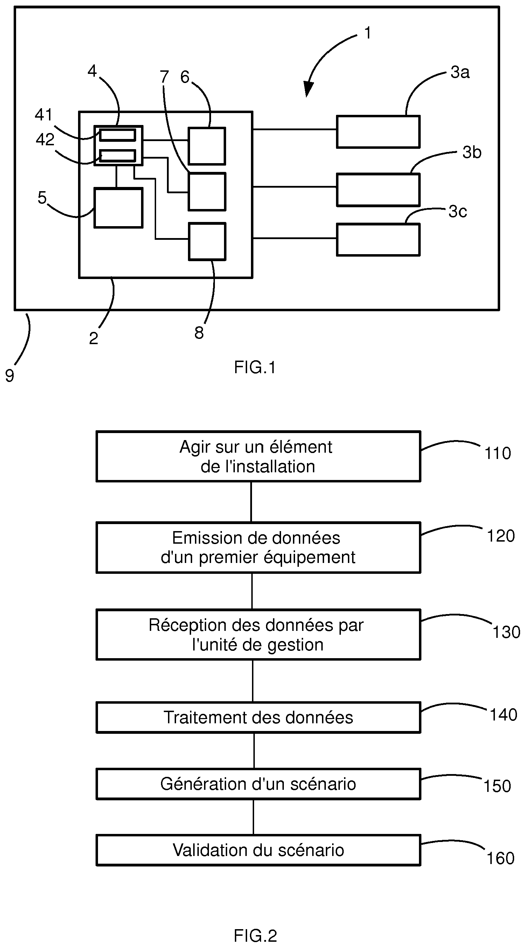

Un premier mode de réalisation d'une installation domotique 1 est décrit ci-après en référence à la figure 1. Une telle installation équipe un bâtiment 9.

L'installation comprend une unité 2 de gestion et/ou de commande et des équipements domotiques, notamment un premier équipement domotique 3a, un deuxième équipement domotique 3b et un troisième équipement domotique 3c.

Du point de vue énergétique, ils peuvent être autonomes en énergie ou être alimentés sur le réseau.

Du point de vue de la communication, les équipements domotiques peuvent communiquer entre eux ou avec l'unité de gestion et/ou de commande par voie filaire ou par voie non filaire. La communication non-filaire peut être réalisée en utilisant des ondes radioélectriques ou des ondes infrarouges. La communication peut être bidirectionnelle ou unidirectionnelle.

Les équipements domotiques peuvent être de différents types. Une liste de types d'équipements domotiques comprend notamment les types suivants : les capteurs, les actionneurs électromécaniques, les unités de commande à distance.

Du point de vue fonctionnel, les équipements domotiques, peuvent posséder une ou plusieurs caractéristiques fonctionnelles différentes, notamment parmi les suivantes : maître/esclave, émission d'information, émission d'ordres, réception d'ordres, exécution d'ordres... Les caractéristiques fonctionnelles peuvent être propres à chaque type d'équipement ou varier indépendamment du type d'équipement.

Les caractéristiques fonctionnelles peuvent être également plus détaillées, notamment :
- détection et/ou mesure d'un paramètre particulier pour les capteurs,
- déplacement d'un commutateur, d'un élément de fermeture, d'occultation, de protection solaire, de ventilation ou d'écran pour les actionneurs.

L'unité de gestion et/ou de commande comprend une unité logique de traitement ou microprocesseur 4, une mémoire 5, un élément 6 d'émission d'informations, notamment de commandes et un élément 7 de réception d'informations. L'unité de gestion et/ou de commande peut aussi comprendre une interface homme-machine 8. L'interface homme-machine peut notamment comprendre un écran et un clavier, en particulier un écran tactile.

L'installation, notamment l'unité de gestion et/ou de commande, en particulier l'unité logique de traitement, comprend tous les éléments matériels et/ou logiciels permettant de mettre en oeuvre le procédé de fonctionnement objet de l'invention. En particulier, certains éléments peuvent consister en des modules de programmes d'ordinateurs. Les éléments matériels et/ou logiciels comprennent un élément 41 de détection de la réception de données incluant une information de type (ou caractéristique structurelle) du premier équipement domotique et relatives à un premier équipement domotique intégré ou installé au sein de l'installation domotique. Les éléments matériels et/ou logiciels comprennent un élément 42 de génération automatique d'au moins un scénario impliquant au moins le premier équipement domotique.

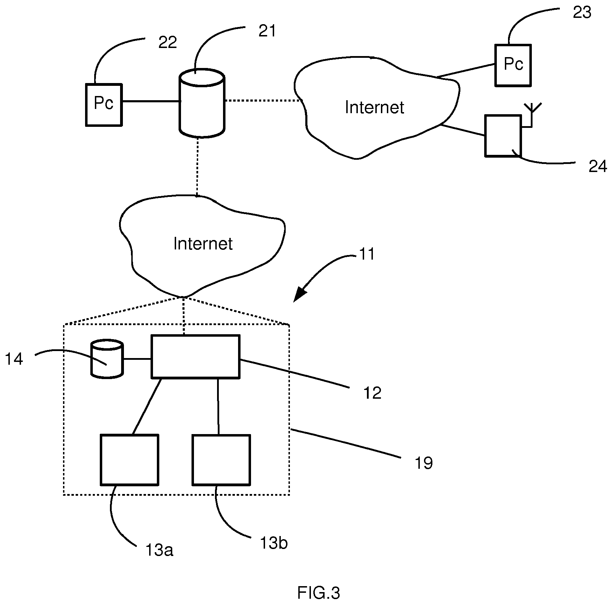

Un deuxième mode de réalisation d'une installation domotique 11 est décrit ci-après en référence à la figure 3. Une telle installation équipe un bâtiment 19.

Dans ce deuxième mode de réalisation, l'installation diffère de celle du premier mode comme suit. L'installation comprend une unité de gestion et/ou de commande incluant :
- un relais 12 ;
- un serveur local optionnel 14 ; et
- un serveur distant 21, notamment un serveur distant relié à un ordinateur 22.

Le serveur local 14 peut être relié au relais 12. Le serveur distant est relié au relais 12, par exemple via internet.

L'installation comprend aussi des équipements domotiques 13a, 13b, notamment un premier équipement domotique 13a et un deuxième équipement domotique 13b.

Par ailleurs, des points de commande 23, 24 comme un ordinateur 23 et/ou un téléphone mobile ou une tablette 24 sont reliés par internet au serveur 21. Une action d'un utilisateur sur ces points de commande peut permettre de commander le premier et/ou le deuxième équipement domotique via le serveur distant ou le serveur local.

Dans ce deuxième mode de réalisation, l'intelligence et/ou les ressources de traitement et/ou les ressources de mémoires peuvent alors être soit déportées au niveau du serveur distant, soit être partagées entre le relais 12 et/ou le serveur local 14 et le serveur distant 21.

Un premier mode d'exécution d'un procédé de fonctionnement ou de configuration d'un actionneur selon l'invention est décrit ci-après en référence à la figure 2.

Dans une première étape 110, l'utilisateur ou l'installateur agit sur un élément de l'installation, c'est-à-dire par exemple sur un des équipements domotiques ou sur l'unité de gestion et/ou de commande. L'action peut par exemple consister en une action mécanique sur l'élément, notamment une action sur un bouton ou une touche de l'élément.

Dans une deuxième étape 120, des données relatives à un premier équipement domotique 3a sont émises, par exemple par le premier équipement, à destination de l'unité de gestion et/ou de commande. Le premier équipement domotique est un équipement domotique nouvellement intégré ou nouvellement installé au sein de l'installation domotique. Les données incluent une information de type, ou caractéristique structurelle, du premier équipement domotique. Les données peuvent aussi inclure une information relative aux caractéristiques fonctionnelles du premier équipement domotique.

Dans une troisième étape 130, les données relatives au premier équipement domotique 3a sont reçues par l'unité de gestion et/ou de commande. Dans cette étape, tout mode de réception de données peut être mis en oeuvre. Les données peuvent être reçues lors d'une réception d'un signal, notamment un signal électrique ou électromagnétique émis par un élément de l'installation. Les données peuvent alternativement être reçues du fait d'une saisie de celles-ci par l'installateur ou l'utilisateur. L'étape de réception de données peut donc comprendre la saisie des données par l'utilisateur ou l'installateur, notamment une étape de saisie au niveau de l'unité.

Dans une quatrième étape 140, les données relatives au premier équipement domotique 3a sont traitées. Ce traitement comprend par exemple une analyse de ces données. Elle peut comprendre aussi une analyse globale de l'installation domotique.

Dans une cinquième étape 150, l'unité de gestion et/ou de commande génère automatiquement au moins un scénario impliquant au moins le premier équipement domotique. Cette étape 150 est mise en oeuvre automatiquement suite à la troisième étape 130 ou plus exactement suite à la détection d'une réception de données relatives au premier équipement domotique. Par automatiquement, on entend que les étapes s'enchaînent sans intervention de l'installateur ou de l'utilisateur. La quatrième étape 140 peut aussi être mise en oeuvre automatiquement suite à la troisième étape 130 ou plus exactement suite à la détection d'une réception de données relatives au premier équipement domotique. Dans cette cinquième étape, la génération d'un scénario peut reposer sur la mise en oeuvre d'une intelligence artificielle, notamment la mise en oeuvre d'une intelligence artificielle au sein de l'unité de gestion et/ou de commande.

En particulier, la gestion automatique de scénarios peut comprendre une ou plusieurs des possibilités suivantes :
- Pré-enregistrement de scénarios possibles dans le logiciel utilisé par l'unité de gestion et/ou de commande ou par l'équipement domotique lui-même.
- Codage de scénarios dans un logiciel d'une plateforme distante ou d'un serveur distant 21. Avec une possibilité de mise à jour des logiciels des différentes unités de gestion et/ou de commande, et/ou des équipements domotiques eux-mêmes, il sera possible de proposer aux utilisateurs de nouveaux scénarios automatiques basés sur des produits nouveaux mis sur le marché postérieurement à la date de l'installation elle-même.
- Génération automatique par des algorithmes auto-adaptatifs utilisant une base de données partagée. La génération automatique de scénarios possibles repose alors sur un apprentissage des usages de différents utilisateurs qui programment eux-mêmes ou font programmer des scénarios particuliers par leur installateur.

L'exemple ci-dessous illustre cette dernière possibilité : si au niveau de la base de données partagée, il est constaté que la majorité des utilisateurs ayant incorporé dans leur installation un capteur d'humidité, l'utilisent dans des scénarios de ventilation naturelle, un scénario équivalent doit être proposé aux nouveaux utilisateurs. Si au contraire, on constate que seulement 10% des utilisateurs ayant incorporé plusieurs capteurs d'humidité les utilisent dans un même scénario, alors il n'est pas nécessaire de proposer un nouveau scénario de ventilation naturelle basé sur un premier capteur d'humidité et intégrant un deuxième capteur d'humidité.

Alternativement, la cinquième étape comprend une étape de recherche de scénario-type dans une base de données. Le scénario est ainsi généré à partir d'un modèle-type adapté à l'équipement domotique, notamment à ses caractéristiques structurelles et/ou fonctionnelles.

Dans une sixième étape 160, l'unité de gestion et/ou de commande communique l'au moins un scénario à l'utilisateur ou à l'installateur, ou communique plusieurs scénarios générés au cours de l'étape précédente. Cette communication peut par exemple être réalisée via l'interface homme-machine 8. L'unité de gestion et/ou de commande peut aussi solliciter l'utilisateur ou l'installateur en vue qu'il détermine si l'au moins un scénario, ou l'un des scénarios doit être intégré ou non dans le fonctionnement de l'installation. Si tel est le cas, l'installateur ou l'utilisateur valide ce scénario qui est alors intégré au fonctionnement de l'installation. Le scénario pourra donc être ultérieurement exécuté dans l'installation. Dans le cas contraire, le scénario est rejeté. Il ne pourra donc pas être exécuté ultérieurement dans l'installation. L'utilisateur peut encore accepter ou valider le scénario tel que proposé, ou accepter ou valider le scénario après l'avoir modifié. L'utilisateur ayant notamment le choix entre plusieurs scénarios proposés, l'acceptation d'un des scénarios peut ou non conduire au rejet des autres scénarios proposés.

De préférence, l'étape de réception de données 130 peut faire partie d'une phase de communication bidirectionnelle entre l'unité et le premier équipement. Cette phase peut inclure une procédure de découverte, notamment une phase de découverte lancée par l'unité. Une telle procédure de découverte suppose que le premier équipement domotique présente des éléments de communication bidirectionnelle lui permettant de communiquer de manière bidirectionnelle.

L'au moins un scénario peut impliquer, outre le premier équipement domotique, au moins un deuxième équipement domotique 3b de l'installation. Dans ce cas, le premier équipement domotique et le deuxième équipement domotique peuvent présenter un lien fonctionnel et/ou spatial, notamment sont implantés dans une même zone, en particulier une même pièce d'un bâtiment. Ainsi, les équipements domotiques impliqués présentent un lien ou une complémentarité leur permettant d'assurer ensemble une fonction particulière, notamment d'assurer ensemble une fonction particulière au sein d'une zone ou d'une pièce particulière d'un bâtiment.

Dans un mode particulier de réalisation de l'invention, l'au moins un scénario généré est un scénario existant, mettant en oeuvre au moins le deuxième équipement domotique et modifié pour tenir compte des caractéristiques structurelles et/ou fonctionnelles du premier équipement domotique. L'étape de génération automatique est donc une étape de modification, ou d'adaptation, d'un scénario existant dans l'installation. Dans ce cas également, le scénario existant n'est pas modifié sans accord explicite de l'utilisateur auquel il est proposé. De même, plusieurs scénarios peuvent être générés à partir du même scénario existant, ou à partir de différents scénarios existants, dans lesquels le premier équipement pourrait intervenir.

L'étape de génération automatique peut avantageusement comprendre la génération de plusieurs scénarii définissant un mode de fonctionnement de l'installation.

Dans un exemple particulier, on suppose qu'on ajoute, comme nouvel équipement domotique, un capteur de présence extérieure dans une installation domotique équipant un bâtiment. L'installation comprend initialement un système d'alarme avec un élément permettant d'envoyer des messages de type SMS. L'installation comprend aussi initialement des actionneurs de manoeuvre de dispositifs d'ouvrants du bâtiment. Dans un tel exemple, suite à la réception par l'unité de gestion et/ou de commande de l'information selon laquelle un capteur de présence extérieure est ajouté, l'unité de gestion et/ou de commande peut générer le scénario suivant :
SI présence extérieure = vrai ALORS FERMER LES VOLETS ET ENVOYER UN SMS.

Ce scénario est proposé à l'utilisateur qui peut soit le rejeter, soit l'accepter. L'utilisateur peut encore accepter le scénario tel que proposé ou accepter le scénario après l'avoir modifié. Par exemple, l'utilisateur peut modifier la liste des volets prenant part au scénario ou modifier la séquence temporelle entre les actions de fermeture des ouvrants et d'envoi du SMS.

Dans un deuxième exemple, on considère une installation de ventilation automatisée comprenant un capteur de CO₂ en tant que capteur de qualité de l'air. Un scénario existant met en oeuvre des trappes de ventilation lorsque le taux de CO₂ dépasse 1000ppm (taux A). Si un nouveau capteur est ajouté, par exemple un capteur d'humidité, un scénario modifié peut être proposé à l'utilisateur, dans lequel l'ouverture des trappes de ventilation est prévue si le taux de CO₂ dépasse le taux A, mais cette ouverture est également prévue si le taux d'humidité dépasse un taux B, par exemple 60% d'humidité.

Ainsi, simplement par ajout du capteur dans l'installation et dialogue entre l'unité et ce nouveau capteur, un scénario adapté est proposé à l'utilisateur qui n'a plus qu'à le valider, voire à valider le taux de déclenchement lié au nouveau capteur.

Dans cet exemple si ultérieurement un actionneur de fenêtre est ajouté à l'installation, il pourra aussi systématiquement être intégré à un nouveau scénario modifié à partir de l'existant, et dans lequel, par exemple :
- les trappes de ventilation et la fenêtre motorisée sont ouvertes si le taux de CO₂ dépasse le taux A ou si le taux d'humidité dépasse le taux B.
- les trappes de ventilation et la fenêtre motorisée sont fermées si le taux de CO₂ devient inférieur au taux A ou si le taux d'humidité devient inférieur au taux B.

Alternativement, un nouveau scénario pourra être généré et proposé à l'utilisateur, dans lequel, par exemple :
- la fenêtre motorisée est ouverte dès que le taux de CO₂ dépasse le taux A ou dès que le taux d'humidité dépasse le taux B ; les trappes de ventilation sont ouvertes après une durée d si au moins l'une des valeurs mesurées est toujours supérieure au seuil (taux A, resp. taux B).
- les trappes de ventilation et la fenêtre motorisée sont fermées si le taux de CO₂ devient inférieur au taux A ou si le taux d'humidité devient inférieur au taux B.

Dans un autre exemple, selon l'agencement spatial des capteurs et actionneur de fenêtre, le scénario peut être défini différemment. En effet, si la fenêtre et le capteur d'humidité sont dans une même zone, notamment dans une même pièce, par exemple dans une salle de bain, alors le scénario proposé peut être indépendant de la mesure réalisée dans une autre zone du bâtiment par le capteur de CO₂.

Au moins l'un des scénarios peut comprendre l'affichage des taux de polluants et/ou des actions correctives mises en oeuvre pour expliquer à l'utilisateur le scénario en cours.

Dans ce document, par « scénario », on entend tout ensemble d'actions, d'instructions, de procédures ou d'opérations mis en oeuvre par un ou plusieurs éléments de l'installation de manière déterminée et/ou logique et/ou coordonnée. Dans le cas d'un scénario ne concernant qu'un seul équipement, l'ensemble des actions comprend au moins une action conditionnelle ou au moins deux actions de l'équipement coordonnées et différées dans le temps. Dans le cas où le scénario met en œuvre plusieurs équipements, la ou les actions sont des actions conjointes ou conditionnelles ou coordonnées dans le temps. Un scénario peut être déclenché par une action d'un utilisateur, notamment un appui sur un bouton de commande de l'installation ou peut être déclenché automatiquement, sans action d'un utilisateur. Par exemple, un scénario peut être déclenché à une heure prédéterminée ou, plus généralement, lorsqu'un ensemble d'au moins une condition prédéterminée est vérifié. Cet ensemble d'au moins une condition prédéterminée fait partie du scénario.

Dans ce document, par « génération d'un scénario », on entend toute planification ou programmation d'un ensemble d'actions, d'instructions, de procédures ou d'opérations devant être mis en oeuvre par un ou plusieurs équipements de l'installation de manière déterminée et/ou logique et/ou coordonnée.

Le scénario peut ainsi comprendre un ensemble de commandes à exécuter par un équipement de l'installation. Dans le cas d'un équipement de fermeture, d'occultation, de protection solaire, mobile sous l'action d'un actionneur électromécanique, le scénario comprend un ensemble de mouvements coordonnés.

Dans le cas d'une interface homme-machine d'une unité de commande à distance, le scénario automatique correspond à une reconfiguration automatique de l'affichage, par exemple de l'affichage de courbes de consommation, sur un niveau de visibilité supérieur, par exemple en page d'accueil lorsqu'un nouveau capteur lié à l'énergie est ajouté à l'installation, alors qu'il était disponible uniquement dans un niveau inférieur de menu déroulant précédemment. Il va de soi que l'affichage d'une nouvelle courbe liée à ce nouveau capteur ne fait pas partie de l'objet de l'invention.

## Revendications

1. Procédé de fonctionnement d'une unité (2 ; 12, 21, 14) de gestion et/ou de commande d'une installation domotique (1 ; 11), le procédé comprenant les étapes suivantes :
- réception de données relatives à un premier équipement domotique (3a ; 13a) intégré ou installé au sein de l'installation domotique, les données incluant au moins une caractéristique structurelle et/ou fonctionnelle du premier équipement domotique,
- suite à l'étape de réception des données, génération automatique d'au moins un scénario impliquant au moins le premier équipement domotique, le premier équipement domotique étant un équipement domotique nouvellement intégré ou nouvellement installé au sein de l'installation domotique, le scénario étant un scénario d'utilisation de l'équipement domotique nouvellement intégré ou nouvellement installé au sein de l'installation domotique et le scénario étant un ensemble d'actions mis en oeuvre par un ou plusieurs équipements domotiques de l'installation de manière déterminée et/ou logique et/ou coordonnée, l'ensemble des actions comprenant au moins une action conditionnelle.

2. Procédé de fonctionnement selon la revendication 1, **caractérisé en ce que** l'étape de réception de données fait partie d'une phase de communication bidirectionnelle entre l'unité de gestion et/ou de commande et le premier équipement, notamment fait partie d'une phase incluant une procédure de découverte lancée par l'unité de gestion et/ou de commande.

3. Procédé de fonctionnement selon la revendication 1, **caractérisé en ce que** l'étape de réception de données comprend une saisie des données par un utilisateur ou un installateur, notamment une étape de saisie au niveau de l'unité.

4. Procédé de fonctionnement selon l'une des revendications précédentes, **caractérisé en ce que** l'au moins un scénario implique au moins un deuxième équipement domotique (3b ; 13b) de l'installation.

5. Procédé de fonctionnement selon l'une des revendications 1 à 3, **caractérisé en ce que** le premier équipement domotique et un deuxième équipement domotique présentent un lien fonctionnel et/ou spatial, notamment sont implantés dans une même zone, en particulier une même pièce d'un bâtiment.

6. Procédé de fonctionnement selon la revendication 4, **caractérisé en ce que** le premier équipement domotique et le deuxième équipement domotique présentent un lien fonctionnel et/ou spatial, notamment sont implantés dans une même zone, en particulier une même pièce d'un bâtiment.

7. Procédé de fonctionnement selon l'une des revendications précédentes, **caractérisé en ce que** l'étape de génération automatique d'au moins un scénario comprend une étape de modification d'un scénario existant préalablement ou consiste en une étape de modification d'un scénario existant préalablement.

8. Procédé de fonctionnement selon l'une des revendications précédentes, **caractérisé en ce qu'**il comprend une étape de communication de l'au moins un scénario à l'utilisateur ou à l'installateur et une étape de sollicitation de l'utilisateur ou de l'installateur en vue de déterminer si l'au moins un scénario doit être intégré ou non dans le fonctionnement de l'installation.

9. Procédé de fonctionnement selon l'une des revendications précédentes, **caractérisé en ce que** l'étape de génération automatique comprend la génération de plusieurs scenarii définissant un mode de fonctionnement de l'installation.

10. Procédé de fonctionnement selon l'une des revendications précédentes, **caractérisé en ce que** le premier équipement domotique comprend un capteur et/ou un actionneur et/ou un élément de commande.

11. Procédé de fonctionnement selon l'une des revendications précédentes, **caractérisé en ce que** le scénario généré au cours de l'étape de génération automatique comprend un ensemble de commandes de mouvements coordonnés du premier équipement domotique.

12. Procédé de fonctionnement selon l'une des revendications précédentes, **caractérisé en ce que** le scénario généré au cours de l'étape de génération automatique comprend une modification d'un niveau d'affichage au niveau d'une interface homme-machine associée au premier équipement domotique.

13. Support d'enregistrement de données, lisible par un calculateur, sur lequel est enregistré un programme informatique comprenant des moyens de codes de programme informatique de mise en oeuvre de phases et/ou étapes du procédé de fonctionnement selon l'une des revendications précédentes.

14. Unité (2 ; 12, 14, 21) de gestion et/ou de commande d'une installation domotique (1 ; 11), **caractérisée en ce qu'**elle comprend des moyens matériels et/ou logiciels (4, 5, 6, 7, 8) de mise en oeuvre du procédé de fonctionnement selon l'une des revendications précédentes.

15. Installation domotique (1 ; 11) comprenant une unité (2 ; 12, 14, 21) de gestion et/ou de commande selon la revendication précédente.

16. Installation domotique (1 ; 11) selon la revendication précédente, **caractérisée en ce qu'**elle comprend une interface homme-machine (22, 23, 24) associée à un ou plusieurs équipements domotiques.

## Patentansprüche

1. Verfahren zum Betrieb einer Verwaltungs- und/oder Steuerungseinheit (2; 12, 21, 14) einer Heimautomatisierungsanlage (1; 11), das Verfahren umfassend die folgenden Schritte:
- Empfangen von Daten in Bezug auf eine erste Heimautomatisierungseinrichtung (3a; 13a), die innerhalb der Heimautomatisierungsanlage integriert oder installiert ist, wobei die Daten mindestens eine strukturelle und/oder funktionelle Charakteristik der ersten Heimautomatisierungseinrichtung aufweisen,
- nach dem Schritt des Empfangens der Daten, automatisches Erzeugen mindestens eines Szenarios, das zumindest die erste Heimautomatisierungseinrichtung enthält, wobei die erste Heimautomatisierungseinrichtung eine Heimautomatisierungseinrichtung ist, die neu innerhalb der Heimautomatisierungsanlage integriert oder installiert ist, wobei das Szenario ein Szenario für die Nutzung der Heimautomatisierungseinrichtung ist, die neu innerhalb der Heimautomatisierungsanlage integriert oder installiert ist, und das Szenario ein Satz von Aktionen ist, der durch eine oder mehrere Heimautomatisierungseinrichtungen auf bestimmte und/oder logische und/oder koordinierte Weise umgesetzt wird, der Satz von Aktionen umfassend mindestens eine bedingte Aktion.

2. Betriebsverfahren nach Anspruch 1, **dadurch gekennzeichnet, dass** der Schritt des Empfangens von Daten zu einer Phase bidirektionaler Kommunikation zwischen der Verwaltungs- und/oder Steuerungseinheit und der ersten Einrichtung gehört, insbesondere zu einer Phase, die ein Erkennungsverfahren aufweist, das durch die Verwaltungs- und/oder Steuerungseinheit gestartet wird.

3. Betriebsverfahren nach Anspruch 1, **dadurch gekennzeichnet, dass** der Schritt des Empfangens von Daten ein Erfassen der Daten durch einen Benutzer oder einen Einrichter umfasst, insbesondere einen Schritt des Erfassens an der Einheit.

4. Betriebsverfahren nach einem der vorhergehenden Ansprüche, **dadurch gekennzeichnet, dass** das mindestens eine Szenario mindestens eine zweite Heimautomatisierungseinrichtung (3b; 13b) der Anlage enthält.

5. Betriebsverfahren nach einem der Ansprüche 1 bis 3, **dadurch gekennzeichnet, dass** die erste Heimautomatisierungseinrichtung und eine zweite Heimautomatisierungseinrichtung eine funktionelle und/oder räumliche Verbindung aufweisen, sich insbesondere in einem selben Bereich befinden, insbesondere in einem selben Raum eines Gebäudes.

6. Betriebsverfahren nach Anspruch 4, **dadurch gekennzeichnet, dass** die erste Heimautomatisierungseinrichtung und die zweite Heimautomatisierungseinrichtung eine funktionelle und/oder räumliche Verbindung aufweisen, sich insbesondere in einem selben Bereich befinden, insbesondere in einem selben Raum eines Gebäudes.

7. Betriebsverfahren nach einem der vorhergehenden Ansprüche, **dadurch gekennzeichnet, dass** der Schritt des automatischen Erzeugens mindestens eines Szenarios einen Schritt des Änderns eines zuvor bestehenden Szenarios umfasst oder aus einem Schritt des Änderns eines zuvor bestehenden Szenarios besteht.

8. Betriebsverfahren nach einem der vorhergehenden Ansprüche, **dadurch gekennzeichnet, dass** es einen Schritt des Kommunizierens des mindestens einen Szenarios an den Benutzer oder an den Einrichter und einen Schritt des Abfragens des Benutzers oder des Einrichters mit dem Ziel des Bestimmens, ob das mindestens eine Szenario in den Betrieb der Anlage integriert werden soll oder nicht, umfasst.

9. Betriebsverfahren nach einem der vorhergehenden Ansprüche, **dadurch gekennzeichnet, dass** der Schritt des automatischen Erzeugens die Erzeugung mehrerer Szenarien umfasst, die einen Betriebsmodus der Anlage festlegen.

10. Betriebsverfahren nach einem der vorhergehenden Ansprüche, **dadurch gekennzeichnet, dass** die erste Heimautomatisierungseinrichtung einen Sensor und/oder Aktor und/oder ein Steuerelement umfasst.

11. Betriebsverfahren nach einem der vorhergehenden Ansprüche, **dadurch gekennzeichnet, dass** das Szenario im Verlauf des Schritts des automatischen Erzeugens einen Satz von Befehlen für koordinierte Bewegungen der ersten Heimautomatisierungseinrichtung umfasst.

12. Betriebsverfahren nach einem der vorhergehenden Ansprüche, **dadurch gekennzeichnet, dass** das Szenario, das im Verlauf des Schritts des automatischen Erzeugens erzeugt wird, eine Änderung eines Anzeigeniveaus an einer Mensch-Maschine-Schnittstelle umfasst, die der ersten Heimautomatisierungseinrichtung zugeordnet ist.

13. Datenspeichermedium, das von einem Rechner gelesen werden kann, auf dem ein Computerprogramm gespeichert ist, das Computerprogramm-Codemittel zur Umsetzung von Phasen und/oder Schritten des Betriebsverfahrens nach einem der vorhergehenden Ansprüche umfasst.

14. Verwaltungs- und/oder Steuerungseinheit (2; 12, 14, 21) einer Heimautomatisierungsanlage (1; 11), **dadurch gekennzeichnet, dass** sie Hardware- und/oder Softwaremittel (4, 5, 6, 7, 8) zur Umsetzung des Betriebsverfahrens nach einem der vorhergehenden Ansprüche umfasst.

15. Heimautomatisierungsanlage (1; 11) umfassend eine Verwaltungs- und/oder Steuerungseinheit (2; 12, 14, 21) nach dem vorhergehenden Anspruch.

16. Heimautomatisierungsanlage (1; 11) nach dem vorhergehenden Anspruch, **dadurch gekennzeichnet, dass** sie eine Mensch-Maschine-Schnittstelle (22, 23, 24) umfasst, die einer oder mehreren Heimautomatisierungseinrichtungen zugeordnet ist.

## Claims

1. Operating method for a management and/or control unit (2; 12, 21, 14) for a home automation installation (1; 11), the method comprising the following steps:
- receiving data relating to a first home automation apparatus (3a; 13a) integrated or installed within the home automation installation, the data including at least one structural and/or functional feature of the first home automation apparatus;
- following the step of receiving the data, automatically generating at least one scenario involving at least the first home automation apparatus, the first home automation apparatus being a home automation apparatus newly integrated or newly installed within the home automation installation, the scenario being a scenario of use of the home automation apparatus newly integrated or newly installed within the home automation installation and the scenario being a set of actions implemented by one or more home automation apparatuses of the installation in a determined and/or logical and/or coordinated manner, the set of actions comprising at least one conditional action.

2. Operating method according to Claim 1, **characterized in that** the step of receiving data forms part of a phase of bidirectional communication between the management and/or control unit and the first apparatus, in particular forms part of a phase including a discovery procedure launched by the management and/or control unit.

3. Operating method according to Claim 1, **characterized in that** the step of receiving data comprises data being input by a user or installer, in particular a step of inputting into the unit.

4. Operating method according to one of the preceding claims, **characterized in that** the at least one scenario involves at least a second home automation apparatus (3b; 13b) of the installation.

5. Operating method according to one of Claims 1 to 3, **characterized in that** the first home automation apparatus and a second home automation apparatus are functionally and/or spatially linked, in particular are installed in one and the same area, in particular one and the same room of a building.

6. Operating method according to Claim 4, **characterized in that** the first home automation apparatus and the second home automation apparatus are functionally and/or spatially linked, in particular are installed in one and the same area, in particular one and the same room of a building.

7. Operating method according to one of the preceding claims, **characterized in that** the step of automatically generating at least one scenario comprises a step of modifying a previously existing scenario or consists of a step of modifying a previously existing scenario.

8. Operating method according to one of the preceding claims, **characterized in that** it comprises a step of communicating the at least one scenario to the user or installer and a step of asking the user or installer to determine whether the at least one scenario should or should not be integrated into the operation of the installation.

9. Operating method according to one of the preceding claims, **characterized in that** the automatic generation step comprises generating a plurality of scenarios defining an operating mode of the installation.

10. Operating method according to one of the preceding claims, **characterized in that** the first home automation apparatus comprises a sensor and/or an actuator and/or a control element.

11. Operating method according to one of the preceding claims, **characterized in that** the scenario generated in the automatic generation step comprises a set of commands for coordinated movements of the first home automation apparatus.

12. Operating method according to one of the preceding claims, **characterized in that** the scenario generated in the automatic generation step comprises modifying a display level at a human-machine interface associated with the first home automation apparatus.

13. Computer-readable data storage medium, on which a computer program is stored which comprises computer program code means for implementing phases and/or steps of the operating method according to one of the preceding claims.

14. Management and/or control unit (2; 12, 14, 21) for a home automation installation (1; 11), **characterized in that** it comprises hardware and/or software means (4, 5, 6, 7, 8) for implementing the operating method according to one of the preceding claims.

15. Home automation installation (1; 11) comprising a management and/or control unit (2; 12, 14, 21) according to the preceding claim.

16. Home automation installation (1; 11) according to the preceding claim, **characterized in that** it comprises a human-machine interface (22, 23, 24) associated with one or more home automation apparatuses.
